# EUROPÄISCHE PATENTSCHRIFT

(11) **EP 1 885 596 B1**
(45) Veröffentlichungstag und Bekanntmachung des Hinweises auf die Patenterteilung: **17.09.2008**
(21) Anmeldenummer: 06753463.6
(22) Anmeldetag: 29.04.2006
(51) Int. Cl.: B62D 53/02, B60K 23/08

(54) **VERFAHREN ZUR ZU- BZW. ABSCHALTUNG DES ALLRADANTRIEBS BEI EINSATZFAHRZEUGEN UND ARBEITSMASCHINEN, DIE KEINE LÄNGSSPERREN AUFWEISEN**
METHOD FOR ACTIVATING AND DEACTIVATING THE FOUR-WHEEL DRIVE OF SERVICE AND WORKING VEHICLES WITHOUT INTERAXLE DIFFERENTIAL LOCKS
PROCEDE DE MISE EN MARCHE ET D'ARRET DE SYSTEME DE TRACTION QUATRE ROUES MOTRICES DE VEHICULES PRIORITAIRES ET D'ENGINS DE TRAVAUX PUBLICS, NE PRESENTANT PAS DE VERROUILLAGES LONGITUDINAUX

(30) Priorität: 31.05.2005 DE 102005024757
(43) Veröffentlichungstag der Anmeldung: 13.02.2008
(73) Patentinhaber: ZF FRIEDRICHSHAFEN AG, 88038 Friedrichshafen (DE)
(72) Erfinder: BURKHART, Hugo, 88213 Ravensburg (DE); AUMANN, Bernd, 88279 Amtzell (DE)
(86) Internationale Anmeldenummer: PCT/EP2006/004053
(87) Internationale Veröffentlichungsnummer: WO 2006/128537

(56) Entgegenhaltungen:
- EP-A- 1 308 337
- AT-B- 340 195
- DE-A1- 1 813 603
- FR-A- 2 486 900
- GB-A- 744 546
- US-A- 5 802 489
- US-A1- 2003 001 426

## Beschreibung

Die vorliegende Erfindung bezieht sich auf ein Verfahren zur Zu- bzw. Abschaltung des Allradantriebs bei Einsatzfahrzeugen und Arbeitsmaschinen, die keine Längssperren aufweisen, gemäß dem Oberbegriff des Patentanspruchs 1.

Herkömmliche knickgelenkte Baumaschinen, beispielsweise Radlader, Muldenkipper oder radgelenkte Ackerschlepper, Bau- oder Spezialmaschinen, sind mit Lastschaltgetrieben, umfassend Drehmomentwandler bzw. Strömungskupplungen oder Hydrostatantriebe, ausgerüstet. Bei den meisten derartigen Einsatzfahrzeugen und Arbeitsmaschinen, beispielsweise bei Radladern, ist ein permanenter Allradantrieb vorgesehen, der mit einer festen Drehmomentverteilung zwischen Vorder- und Hinterachse am Getriebeabtrieb realisiert wird.

Der permanente Allradantrieb kann sich in einigen Betriebszuständen negativ auswirken. Beispielsweise kann der permanente Allradantrieb in einem erhöhten Kraftstoffverbrauch sowie in verschlechterten Fahreigenschaften und Fahrleistungen resultieren. Des weiteren kann der permanente Allradantrieb eine unnötig hohe mechanische Belastung der Antriebskomponenten und einen erhöhten Reifenverschleiß zur Folge haben.

Der vorliegenden Erfindung liegt die Aufgabe zugrunde, ein Verfahren zur Zu- bzw. Abschaltung des Allradantriebs bei Einsatzfahrzeugen und Arbeitsmaschinen, die keine Längssperren aufweisen, anzugeben, das zu dessen Durchführung bereits vorhandene Parameter benötigt und den Fahrzustand des Fahrzeugs gerade in kritischen Situationen nicht ungünstig beeinflusst. Des weiteren soll das erfindungsgemäße Verfahren keine zusätzliche Sensorik benötigen. Durch das Verfahren soll die Zu- bzw. Abschaltung des Allradantriebs automatisch erfolgen, wobei in Extremfällen ein manuelles Eingreifen in das System möglich sein soll.

Diese Aufgabe wird gemäß der Erfindung durch die Merkmale des Patentanspruchs 1 gelöst. Weitere Ausgestaltungen und Vorteile gehen aus den Unteransprüchen hervor.

Demnach wird vorgeschlagen, die Zu- bzw. Abschaltung des Allradantriebs, insbesondere bei knickgelenkten Radladern, aus den Fahr- und/oder Lastzuständen des Fahrzeugs abzuleiten, wobei das das Getriebeabtriebsmoment als Parameter verwendet wird. Hierbei werden keine Längssperren benötigt; die Verteilung der Leistung auf die Achsen nimmt für den Fall, dass der Allradantrieb zugeschaltet ist, einen festen vorgegebenen Wert an, der beispielsweise 1:1 sein kann. Zur Realisierung des Allradantriebs können, je nach Konstruktion, form- oder kraftschlüssige Schaltelemente verwendet werden.

Gemäß der Erfindung ist vorgesehen, dass der Allradantrieb zugeschaltet wird, wenn die Fahrzeuggeschwindigkeit einen vorgegebenen Schwellenwert v_1 unterschreitet und/oder das Getriebeabtriebsmoment einen vorgegebenen Schwellenwert T_Ab1 überschreitet.

Des weiteren ist vorgesehen, dass der Allradantrieb abgeschaltet wird, wenn die Fahrzeuggeschwindigkeit einen vorgegebenen Schwellenwert v_2 überschreitet oder wenn das Getriebeabtriebsmoment einen vorgegebenen Schwellenwert T_Ab2 unterschreitet, wobei v_2 größer als v_1 und T_Ab2 kleiner als T_Ab1 ist.

Durch die erfindungsgemäße Konzeption wird ein Einzelachsantrieb mit automatisch zuschaltbarer zweiter Achse realisiert. In vorteilhafter Weise kann als Drehzahlsensor der bereits vorhandene Sensor im Getriebeabtrieb verwendet werden, wobei die zur Erfassung des Abtriebsmomentes notwendigen Informationen aus den vorhandenen Größen der Antriebskomponenten errechnet werden können. Beispielsweise kann der als Parameter benötigte Wert des Getriebeabtriebsmomentes über das Getriebeeingangsmoment, beispielsweise aus der Differenzdrehzahl des hydrodynamischen Wandlers, und den eingelegten Gang ermittelt werden.

Im Rahmen einer besonders vorteilhaften Variante des erfindungsgemäßen Verfahrens wird vorgeschlagen, dass der Schwellenwert des Getriebeabtriebsmomentes T_Ab1 vom Fahrer mittels einer geeigneten Einrichtung, beispielsweise eines Drehpotentiometers im Armaturenbrett, entsprechend den Fahrzeugeinsatzbedingungen eingestellt werden kann. Dadurch kann in Abhängigkeit vom Arbeitseinsatz, vom Wetter, von der Fahrbahnbeschaffenheit etc. der Schwellenwert T_Ab1 für das Getriebeabtriebsmoment angepasst werden. Auf diese Weise kann der Fahrer z.B. den Schwellenwert bei schmierigem Untergrund derart einstellen, dass der Allradantrieb bei einem kleinen Drehmoment zugeschaltet wird; bei griffigem Untergrund kann durch eine entsprechende Einstellung der Allradantrieb erst bei höherem Drehmoment zugeschaltet werden. Da sich diese Parameter im Allgemeinen während eines typischen Arbeitseinsatzes nur selten ändern, sind manuelle Eingriffe nicht bzw. nur selten notwendig.

Gemäß der Erfindung kann vorgesehen sein, dass eine Änderung des Wertes des Schwellenwertes des Getriebeabtriebsmomentes T_Ab1 auch in einer Änderung des Schwellenwertes des Getriebeabtriebsmomentes T_Ab2 resultiert. Dies kann beispielsweise über einen in der Steuerung abgelegten Algorithmus oder eine Kennlinie erfolgen.

Beispielsweise können für den Fall, dass ein Potentiometer zur Einstellung des Schwellenwertes T_Ab1 verwendet wird, folgende Funktionalitäten in Abhängigkeit von der Potentiometererstellung realisiert werden:
Endanschlag 1:
   Allradantrieb wird nie zugeschaltet;
Endanschlag 2:
   Allradantrieb wird manuell zugeschaltet und
Bereich zwischen Endanschlag 1 und Endanschlag 2:
   Stufenlose Einstellung des Schwellenwertes T_Ab1.

Durch diese Ausgestaltung sind weitere Eingriffe des Fahrers nicht notwendig, derart, dass ein im Fahrzeug vorgesehener Fußschalter für die manuelle Zuschaltung des Allradantriebs entfallen kann.

Gemäß einer Weiterbildung der Erfindung kann auch vorgesehen sein, dass der Schwellenwert für die Fahrzeuggeschwindigkeit v_1 analog zur beschriebenen Einstellung des Abtriebsdrehmoments vom Fahrer eingestellt werden kann.

Das erfindungsgemäße Verfahren ist insbesondere für Radlader geeignet, wobei in diesem Fall die Vorderachse permanent angetrieben wird und die Hinterachse gemäß dem erfindungsgemäßen Verfahren zugeschaltet wird, um den Allradantrieb zu realisieren. Bei anderen Fahrzeugen kann, wenn dies erforderlich ist, die Hinterachse permanent angetrieben werden und die Vorderachse gemäß der Erfindung zugeschaltet werden.

Weitere Merkmale sind der Figurenbeschreibung zu entnehmen.

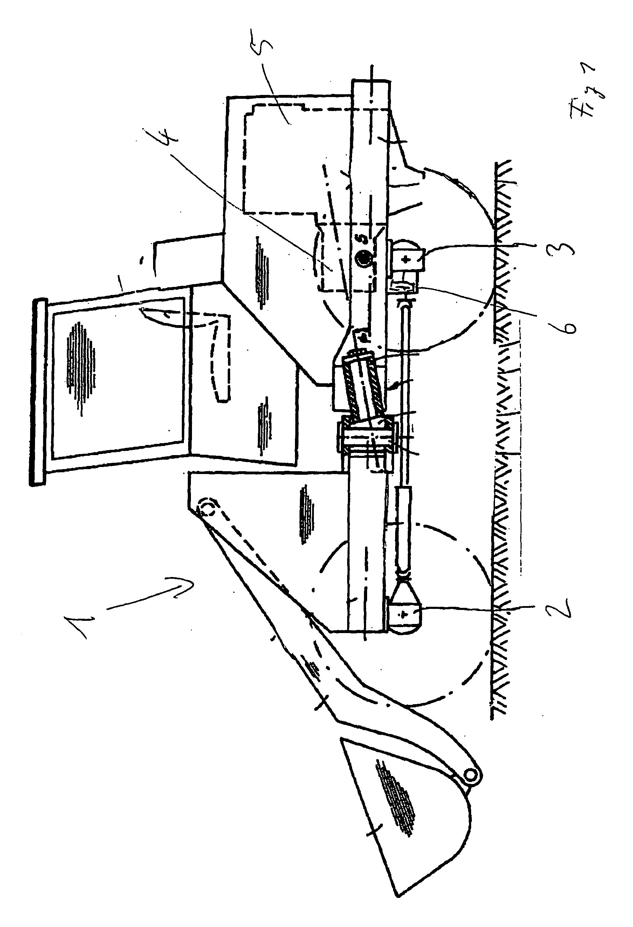

Die einzige Figur zeigt einen knickgelenkten Radlader 1 mit einer Vorderachse 2 und einer Hinterachse 3.
Die Vorderachse 2 ist permanent über das Getriebe 4 mit dem Antriebsmotor 5 verbunden, wobei der Antriebsmotor 5 über einen Drehmomentwandler in das Getriebe 4 eintreibt.
Die Hinterachse 3 ist über eine Kupplung 6 zu- bzw. abschaltbar. Die Zu- bzw. Abschaltung erfolgt in Abhängigkeit des Abtriebsdrehmoments oder in Abhängigkeit der Fahrzeuggeschwindigkeit und des Abtriebsdrehmoments.

### Bezugszeichen

- 1: Radlader
- 2: Vorderachse
- 3: Hinterachse
- 4: Getriebe
- 5: Antriebsmotor
- 6: Kupplung

## Patentansprüche

1. Verfahren zur Zu- bzw. Abschaltung des Allradantriebs bei Einsatzfahrzeugen und Arbeitsmaschinen, die keine Längssperren aufweisen, **dadurch gekennzeichnet, dass** die Zu- bzw. Abschattung des Allradantriebs aus den Fahr-und/oder Lastzuständen des Fahrzeugs abgeleitet wird, wobei als Parameter das Getriebeabtriebsmoment verwendet wird.

2. Verfahren zur Zu- bzw. Abschaltung des Allradantriebs nach Anspruch 1, **dadurch gekennzeichnet, dass** der Allradantrieb zugeschaltet wird, wenn das Getriebeabtriebsmoment einen vorgegebenen Schwellenwert T_Ab1 überschreitet, und dass der Allradantrieb abgeschaltet wird, wenn das Getriebeabtriebsmoment einen vorgegebenen Schwellenwert T_Ab2 unterschreitet, wobei T_Ab2 kleiner als T_Ab1 ist.

3. Verfahren zur Zu- bzw. Abschaltung des Allradantriebs nach Anspruch 2, **dadurch gekennzeichnet, dass** der Schwellenwert des Getriebeabtriebsmomentes T_Ab1 vom Fahrer einstellbar ist.

4. Verfahren zur Zu- bzw. Abschaltung des Allradantriebs nach Anspruch 3, **dadurch gekennzeichnet, dass** eine Änderung des Wertes des Schwellenwertes des Getriebeabtriebsmomentes T_Ab1 in einer Änderung des Schwellenwertes des Getriebeabtriebsmomentes T_Ab2 resultiert, was über einen in der Steuerung abgelegten Algorithmus oder eine Kennlinie erfolgt.

5. Verfahren zur Zu- bzw. Abschaltung des Allradantriebs nach Anspruch 3 oder 4, **dadurch gekennzeichnet, dass** zur Einstellung des Schwellenwertes T_Ab1 ein Potentiometer verwendet wird, wobei folgende Funktionalitäten in Abhängigkeit von der Potentiometererstellung realisiert werden:
Endanschlag 1:
Allradantrieb wird nie zugeschaltet;
Endanschlag 2:
Allradantrieb wird manuell zugeschaltet und
Bereich zwischen Endanschlag 1 und Endanschlag 2:
Stufenlose Einstellung des Schwellenwertes T_Ab1.

6. Verfahren zur Zu- bzw. Abschaltung des Allradantriebs nach einem der Ansprüche 1 bis 5, **dadurch gekennzeichnet, dass** der Allradantrieb zugeschaltet wird, wenn die Fahrzeuggeschwindigkeit einen vorgegebenen Schwellenwert v_1 unterschreitet , und dass der Allradantrieb abgeschaltet wird, wenn die Fahrzeuggeschwindigkeit einen vorgegebenen Schwellenwert v_2 überschreitet , wobei v_2 größer als v_1 ist.

7. Verfahren zur Zu- bzw. Abschaltung des Allradantriebs nach Anspruch 6, **dadurch gekennzeichnet, dass** der Schwellenwert für die Fahrzeuggeschwindigkeit v_1 vom Fahrer einstellbar ist.

8. Verfahren zur Zu- bzw. Abschaltung des Allradantriebs nach einem der vorangehenden Ansprüche, **dadurch gekennzeichnet, dass** als Drehzahlsensor der bereits vorhandene Sensor im Getriebeabtrieb verwendet wird, wobei die zur Erfassung des Abtriebsmomentes notwendigen Informationen aus den vorhandenen Größen der Antriebskomponenten errechnet werden.

## Claims

1. Method for AWD engagement or disengagement in emergency vehicles and work machines not equipped with center-differential locks, **characterized in that** AWD engagement or disengagement is derived from the driving and/or load conditions of the vehicle, with the transmission output torque being used as parameter.

2. Method for AWD engagement or disengagement according to claim 1, **characterized in that** AWD is engaged when the transmission output torque exceeds a specified threshold value T_Ab1 and that AWD is disengaged when the transmission output torque remains under a specified threshold value T_Ab2, with T_Ab2 being smaller than T Ab1.

3. Method for AWD engagement or disengagement according to claim 2, **characterized in that** the threshold value of the transmission output torque T _Ab1 can be set by the driver.

4. Method for AWD engagement or disengagement according to claim 3, **characterized in that** changing the threshold value of the transmission output torque T_Ab1 results in a changed threshold value of the transmission output torque T_Ab2, which happens via an algorithm or a characteristic filed in the control.

5. Method for AWD engagement or disengagement according to claim 3 or 4, **characterized in that** a potentiometer is employed for adjustment of the threshold value T_Ab1, with the following functionalities being realized depending on the potentiometer position:
end stop 1:
AWD is never engaged;
end stop 2:
AVVD is manually engaged; and
between end stop 1 and end stop 2:
continuously variable adjustment of threshold value T_Ab1.

6. Method for AWD engagement or disengagement according to one of the claims 1 thru 5, **characterized in that** AWD is engaged when the vehicle speed remains under a specified threshold value v_1 and that AWD is disengaged when the vehicle speed exceeds a specified threshold value v_2, with v_2 being greater than v_1.

7. Method for AWD engagement or disengagement according to claim 6, **characterized in that** the threshold value for the vehicle speed v_1 can be set by the driver.

8. Method for AWD engagement or disengagement according to one of the preceding claims, **characterized in that** the existing sensor in the transmission output is used as speed sensor, with the information required for determination of the output torque being calculated with the help of the existing variables of the drive components.

## Revendications

1. Procédé d'activation ou de désactivation du système de traction intégrale de véhicules d'intervention et d'engins de travaux publics ne comportant pas de blocages longitudinaux, **caractérisé en ce que** l'activation et la désactivation de la traction intégrale est déduit des conditions de conduite et/ou de l'état de charge du véhicule, sachant qu'en tant que paramètre est utilisé le couple de sortie de la boîte de vitesses.

2. Procédé d'activation ou de désactivation du système de traction intégrale selon la revendication 1, **caractérisé en ce que** la traction intégrale est activée dès que le couple de sortie de la boîte de vitesses dépasse un seuil T_Ab1 prédéfini, et **en ce que** la traction intégrale est désactivée dès que le couple de sortie de la boîte de vitesses descend en dessous d'un seuil T_Ab2 prédéfini, sachant que T_Ab2 est inférieur à T_Ab1.

3. Procédé d'activation et de désactivation d'un système de traction intégrale selon la revendication 2, **caractérisé en ce que** le seuil T_Ab1 du couple de sortie de la boîte de vitesses peut être réglé par le conducteur.

4. Procédé d'activation et de désactivation d'un système de traction intégrale selon la revendication 3, **caractérisé en ce que** une modification de la valeur du seuil T_Ab1 du couple de sortie de la boîte de vitesses résulte en une modification du seuil T_Ab2 du couple de sortie de la boîte de vitesses, ceci s'effectuant par l'intermédiaire d'un algorithme ou une loi enregistrés dans le boîtier de commande.

5. Procédé d'activation ou de désactivation du système de traction intégrale selon la revendication 3 ou 4, **caractérisé en ce que** pour le réglage du seuil T_Ab1 est utilisé un potentiomètre, sachant que les fonctionnalités suivantes sont réalisées en fonction du réglage du potentiomètre:
Fin de course 1 :
traction intégrale n'est jamais activée ;
Fin de course 2 :
traction intégrale est activée manuellement et
Plage entre la butée 1 et la butée 2 :
réglage continu du seuil T_Ab1.

6. Procédé d'activation ou de désactivation du système de traction intégrale selon une des revendications 1 à 5, **caractérisé en ce que** la traction intégrale est activée dès que la vitesse du véhicule descend en dessous d'un seuil v_1 prédéfini et **en ce que** la traction intégrale est désactivée dès que la vitesse du véhicule dépasse un seuil v_2 prédéfini, sachant que v_2 est supérieur à v_1.

7. Procédé d'activation et de désactivation d'un système de traction intégrale selon la revendication 6, **caractérisé en ce que** le seuil v_1 pour la vitesse du véhicule peut être réglé par le conducteur.

8. Procédé d'activation ou de désactivation du système de traction intégrale selon une des revendications précédentes, **caractérisé en ce que** en tant que capteur de régime est utilisé le capteur déjà présent au niveau de la sortie de la boîte de vitesses, sachant que les informations nécessaires pour la saisie du couple de sortie sont calculées à partir des grandeurs existantes des composants de transmission.
